(19) Europäisches Patentamt / European Patent Office / Office européen des brevets

(11) **EP 3 613 778 B1**

(12) **EUROPEAN PATENT SPECIFICATION**

(45) Date of publication and mention
of the grant of the patent:
**06.08.2025  Bulletin 2025/32**

(21) Application number: **18787889.7**

(22) Date of filing: **19.04.2018**

(51) International Patent Classification (IPC):
**C08F 2/18** (2006.01)     **C08F 2/20** (2006.01)
**C08F 2/38** (2006.01)     **C08F 8/12** (2006.01)
**C08F 16/06** (2006.01)     **C08F 2/06** (2006.01)
**C08F 2/30** (2006.01)     **C08F 8/18** (2006.01)
**C08F 14/06** (2006.01)     **C08K 5/12** (2006.01)
**C08F 18/08** (2006.01)

(52) Cooperative Patent Classification (CPC):
(C-Sets available)
**C08F 2/06; C08F 2/18; C08F 2/20; C08F 2/30;
C08F 8/12; C08F 8/18; C08F 14/06; C08F 18/08;
C08K 5/12**                                   (Cont.)

(86) International application number:
**PCT/JP2018/016111**

(87) International publication number:
**WO 2018/194122 (25.10.2018 Gazette 2018/43)**

(54) **DISPERSION STABILIZER FOR SUSPENSION POLYMERIZATION OF VINYL COMPOUND, METHOD FOR PRODUCING SAME, AND METHOD OF PRODUCING VINYL POLYMER**

DISPERSIONSSTABILISATOR FÜR SUSPENSIONSPOLYMERISIERUNG VON VINYLVERBINDUNG, VERFAHREN ZUR HERSTELLUNG DAVON UND VERFAHREN ZUR HERSTELLUNG VON VINYLPOLYMER

STABILISANT DE DISPERSION POUR LA POLYMÉRISATION EN SUSPENSION D'UN COMPOSÉ VINYLIQUE, PROCÉDÉ POUR LA PRODUCTION DE CELUI-CI ET PROCÉDÉ DE PRODUCTION DE POLYMÈRE VINYLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.04.2017  JP 2017084585**

(43) Date of publication of application:
**26.02.2020  Bulletin 2020/09**

(73) Proprietor: **Kuraray Co., Ltd.**
**Okayama 710-0801 (JP)**

(72) Inventor: **FUKUHARA Tadahito**
**Kurashiki-shi**
**Okayama 713-8550 (JP)**

(74) Representative: **Müller-Boré & Partner
Patentanwälte PartG mbB
Friedenheimer Brücke 21
80639 München (DE)**

(56) References cited:
EP-A1- 2 876 116          WO-A1-2015/119144
WO-A1-2016/076349     WO-A1-2016/141256
JP-A- 2004 189 889       JP-A- 2004 250 695
JP-A- H08 269 112         US-A- 5 780 547

(52) Cooperative Patent Classification (CPC): (Cont.)

C-Sets
**C08F 8/12, C08F 218/08;**
**C08F 8/18, C08F 218/08;**
**C08F 14/06, C08F 2/20;**
**C08F 18/08, C08F 2/38;**
**C08K 5/12, C08L 27/06**

**Description**

TECHNICAL FIELD

The present invention relates to a dispersion stabilizer for suspension polymerization. Specifically, the present invention relates to a dispersion stabilizer for suspension polymerization of vinyl compounds that contains chlorine or bromine atoms in a specific proportion, and in which the degree of saponification, the viscosity-average degree of polymerization, ultraviolet (UV) absorption spectrum absorbances at specific wavelengths, and the cloud point fall in specific ranges. The present invention also relates to a method for producing such a dispersion stabilizer, and a method for producing a vinyl polymer.

BACKGROUND ART

One known example of a use of polyvinyl alcohol (hereinafter, also referred to as "PVA" for short) is a dispersion stabilizer for suspension polymerization of vinyl compounds, and a variety of PVAs are used to this end (see Patent Literatures 1 to 4).
In order to improve polymerization stability during polymerization of vinyl chloride, some PVAs are used for polymerization reaction after being subjected to heat treatment (see Patent Literatures 1 to 3) while others use a PVA satisfying expressions relating UV absorbance at a specific wavelength and molecular weight (see Patent Literature 4). However, the polymerization stability of vinyl monomers resulting from the use of these PVAs as dispersion stabilizers in suspension polymerization of vinyl chloride is not always satisfactory. In fact, the polymerization stability is insufficient, and the product vinyl chloride polymer contains a large number of coarse particles, particularly when these dispersion stabilizers for suspension polymerization are used in small amounts.

CITATION LIST

Patent Literature

[0004]

　　　　Patent Literature 1: JP 51(1976)-45189 A
　　　　Patent Literature 2: JP 10(1998)-67806 A
　　　　Patent Literature 3: JP 2004-250695 A
　　　　Patent Literature 4: WO2015/119144

Further, US 5 780 547 A describes a dispersing stabilizer for suspension homopolymerization or copolymerization of vinyl chloride, comprising a polyvinyl alcohol having a degree of hydrolysis of 75 to 85% by mole, an absorbance of not less than 0.1 measured at a wavelength of 280 μm with respect to a 0.1% by weight aqueous solution, a content of carboxyl group of 0.01 to 0.08% by mole and a cloud point of not less than 50°C measured with respect to the 0.1% by weight aqueous solution;
EP 2 876 116 A1 describes a dispersion stabilizer for suspension polymerization of vinyl compounds comprising a vinyl alcohol polymer (A) which has a saponification degree of 30 mol% or more and less than 60 mol% and a viscosity-average polymerization degree (P) of more than 200 and less than 600, and has a terminal alkyl group having 6 to 18 carbon atoms, and in which a content of monomer units having an oxyalkylene group is 0.3 mol% or less and the relationship between the viscosity-average polymerization degree (P) and a modification rate (S)(mol%) of the alkyl group satisfies Formula (1) $50 \leq S \times P / 1.880 < 100$; and
WO 2016/141256 A1 describes dispersing agent useful in a suspension polymerization process, the dispersing agent comprising:
a polyvinyl alcohol having:

　　　　a degree of hydrolysis in the range from 60 to 80 mol%;
　　　　an absorbance of not less than 0.3 measured at a wavelength of 320 nm with respect to a 0.1 wt% aqueous solution of the polyvinyl alcohol; a block character of remaining ester groups in the range from 0.4 to 0.5; and a cloud point in the range from 35°C to 50°C measured with respect to a 1 wt% aqueous solution of the polyvinyl alcohol.

SUMMARY OF INVENTION

Technical Problem

The present invention has been made to provide a solution to the foregoing problem, and it is an object of the present invention to provide a dispersion stabilizer for suspension polymerization of vinyl compounds that exhibits excellent polymerization stability even when used in reduced amounts, and provides excellent plasticizer absorptivity with little formation of coarse particles. Another object of the present invention is to provide a method for producing such a dispersion stabilizer.

Solution to Problem

After intensive studies, the present inventor found that the foregoing issue can be resolved with the use of a dispersion stabilizer for suspension polymerization comprising a vinyl alcohol polymer (A) that contains a specific amount of chlorine or bromine atoms, and in which the cloud point and absorbances at specific wavelengths fall in specific ranges in aqueous solutions. The present invention was completed on the basis of this finding.

Specifically, the present invention is set out in the appended set of claims.

Advantageous Effects of Invention

When used for suspension polymerization of a vinyl compound, a dispersion stabilizer for suspension polymerization of the present invention exhibits excellent polymerization stability even when used in reduced amounts, and the product vinyl polymer excels in plasticizer absorptivity with little formation of coarse particles.

DESCRIPTION OF EMBODIMENTS

Dispersion Stabilizer for Suspension Polymerization

A dispersion stabilizer for suspension polymerization of the present invention comprises a specific vinyl alcohol polymer (A). The vinyl alcohol polymer (A) has a viscosity-average degree of polymerization of more than 500 and less than 1,000, a degree of saponification of more than 65 mol% and less than 77 mol%, a degree of modification by a chlorine or bromine atom of 0.10% by mass or more and less than 1.00% by mass, a cloud point of more than 25.0°C and less than 35.0°C in a 1% by mass aqueous solution, a UV absorption spectrum absorbance (x) at 280 nm of more than 0.420 and less than 0.520 in a 0.1% by mass aqueous solution, and a UV absorption spectrum absorbance (y) at 320 nm of more than 0.300 and less than 0.400 in the same 0.1% by mass aqueous solution. A dispersion stabilizer for suspension polymerization of the present invention may substantially consist of the vinyl alcohol polymer (A). As used herein, "substantially solely consisting of vinyl alcohol polymer (A)" means that the content of components other than the vinyl alcohol polymer (A) in the dispersion stabilizer for suspension polymerization is less than 5% by mass, preferably less than 1% by mass, even more preferably less than 0.1% by mass. It is also to be noted that the numerical ranges recited in this specification may be combinations of upper and lower limits that are changed as appropriate from the upper and lower limits specified herein, provided that such changes are made within the specified ranges.

Vinyl Alcohol Polymer (A)

The vinyl alcohol polymer (A) used in the present invention (hereinafter, vinyl alcohol polymer will be referred to also as "PVA" for short) can be produced with a polymerization step of obtaining a vinyl ester polymer through polymerization of a vinyl ester monomer with addition of preferably carbon tetrachloride or carbon tetrabromide as a chain transfer agent, and a step of obtaining a vinyl alcohol polymer through saponification of the vinyl ester polymer obtained in the polymerization step. The polymerization may be carried out using a known method, for example, such as bulk polymerization, solution polymerization, suspension polymerization, emulsion polymerization, or dispersion polymerization. Preferred from the viewpoint of industrial applications are solution polymerization, emulsion polymerization, and dispersion polymerization. The polymerization may be any of a batch, a semi-batch, and a continuous process.

Examples of the vinyl ester monomer include vinyl acetate, vinyl formate, vinyl propionate, vinyl caprylate, and vinyl versatate. Preferred from the viewpoint of industrial applications is vinyl acetate.

In the vinyl ester monomer polymerization step, it is preferable to use a chain transfer agent to adjust the degree of polymerization. From the viewpoints of compatibility with the vinyl compound used as the dispersion stabilizer for suspension polymerization of vinyl compounds, and the ability to introduce a modifying group having high radical reactivity, the chain transfer agent is preferably one selected from, for example, carbon tetrachloride, carbon tetrabromide, trichloromethane, tribromomethane, dichloromethane, and dibromomethane. Carbon tetrachloride and carbon tetrabromide are more preferred from the viewpoint of reactivity and ease of handling.

In the polymerization step, the polymerization conversion rate of the vinyl ester monomer is 20% or more and less than 90%. The reaction suffers from poor productivity when the polymerization conversion rate is less than 20%. With a polymerization conversion rate of 90% or more, the viscosity in a polymerization vessel becomes excessively high, which, in addition to making the production difficult, tends to decrease the degree of modification as a result of elimination of a modifying group due to extended exposure to radicals, though the extent of elimination depends on the type of the modifying group introduced. The polymerization conversion rate is preferably 30% to 85%, more preferably 35% to 80%, even more preferably 40% to 70%.

For the production of PVA(A), the chain transfer agent may be added at once in early stages of the polymerization step. It is, however, preferable to sequentially add carbon tetrachloride or carbon tetrabromide as the chain transfer agent because the chain transfer agent, when added at once, may cause gelation due to nonuniform reaction, or may cause decrease of the degree of modification by chlorine or bromine atoms. The chain transfer agent is added in an amount of preferably 0.05 parts by mass or more and 10 parts by mass or less, more preferably 0.10 parts by mass or more and less than 5.0 parts by mass, even more preferably 0.15 parts by mass or more and less than 2.0 parts by mass relative to 100 parts by mass of the vinyl ester monomer.

For the saponification reaction of vinyl ester polymer, a conventionally known alcoholysis or hydrolysis reaction is applicable that uses a basic catalyst such as sodium hydroxide, potassium hydroxide, or sodium methoxide, or an acid catalyst such as p-toluenesulfonic acid as a saponification catalyst. The saponification catalyst is used in an amount of 0.001 to 0.50, more preferably 0.003 to 0.10, even more preferably 0.004 to 0.05 in terms of a molar ratio with respect to the vinyl ester monomer unit of the vinyl ester polymer, though the amount used is not particularly limited. Examples of the solvent usable in the saponification reaction include alcohols such as methanol and ethanol; esters such as methyl acetate and ethyl acetate; ketones such as acetone and methyl ethyl ketone; and aromatic hydrocarbons such as benzene and toluene. These may be used alone, or two or more thereof may be used in combination. For convenience, it is preferable to carry out the saponification reaction in the presence of basic catalyst sodium hydroxide, using methanol or a mixed solution of methanol and methyl acetate as solvent.

The water content of the saponification reaction solution (a feedstock vinyl ester polymer solution) used for the saponification reaction of vinyl ester polymer is not particularly limited, and is preferably less than 5% by mass, more preferably 3% by mass or less, even more preferably 1% by mass or less. The concentration of the vinyl ester polymer in the saponification reaction solution is preferably 10% to 60% by mass, more preferably 20% to 60% by mass, even more preferably 25% to 60% by mass.

It is important that the degree of modification by a chlorine or bromine atom in PVA(A), that is, the chlorine or bromine atom content, be 0.10% by mass or more and less than 1.00% by mass. Preferably, the degree of modification by a chlorine or bromine atom is 0.14% by mass or more and 0.80% by mass or less because it makes the polymerization more stable, and improves the plasticizer absorptivity with less formation of coarse particles. With a degree of modification of less than 0.10% by mass, PVA(A) fails to exhibit sufficient polymerization stability when used as a dispersion stabilizer for suspension polymerization of vinyl compounds. When the degree of modification is 1.00% by mass or more, PVA(A) becomes overly compatible with a vinyl compound, and easily dissolves therein, with the result that PVA(A) loses its function as a dispersion stabilizer for vinyl compounds, and the polymerization stability becomes insufficient. A PVA(A) with a degree of modification of 1.00% by mass or more also tends to undergo gelation during its synthesis, and is difficult to produce.

The degree of modification by a chlorine or bromine atom in PVA(A) can be measured using a known method. Specifically, it is convenient to use, for example, the ion chromatography technique described in JIS Z 7302-6:1999 (total chlorine content testing method), or the elemental analysis by ICP emission spectroscopy described in JIS K 0116:2014. In order to determine the degree of modification by a chlorine or bromine atom in PVA(A), a PVA(A) sample was burned in an oxygen-filled flask, and the combustion gas was absorbed in water. The mass of chlorine or bromine atoms in PVA(A) was then determined by ion chromatography measurement to calculate the degree of modification.

It is important that PVA(A) have a viscosity-average degree of polymerization of more than 500 and less than 1,000. Preferably, the viscosity-average degree of polymerization is more than 600 and less than 900, even more preferably more than 650 and less than 850. With a viscosity-average degree of polymerization of 500 or less, polymerization of vinyl compound becomes unstable, and the resulting vinyl polymer particles have a large average particle diameter with a large proportion of coarse particles. The plasticizer absorptivity of the resulting vinyl polymer particles decreases when the viscosity-average degree of polymerization is 1,000 or more. Here, the viscosity-average degree of polymerization is a measured value based on JIS K 6726:1994. Specifically, in the case of a PVA with a degree of saponification of less than 99.5 mol%, the PVA was saponified until the degree of saponification reached at least 99.5 mol%, and the viscosity-average degree of polymerization (P) was determined from the limiting viscosity $[\eta]$ (liter/g) measured in water at 30°C, using the following formula.

$$P = ([\eta] \times 10^4/8.29)^{(1/0.62)}$$

It is important that the degree of saponification of PVA(A) be more than 65 mol% and less than 77 mol%. Preferably, the degree of saponification is more than 68 mol% and less than 75 mol%. A degree of saponification of 65 mol% or less impairs ease of handling, such as by causing PVA(A) to easily precipitate upon being dissolved in water, making it impossible to add PVA(A) in accurate quantities. With a degree of saponification of 65 mol% or less, the resulting vinyl polymer particles have a large average particle diameter with an increased proportion of coarse particles. When the degree of saponification is 77 mol% or more, the resulting vinyl polymer particles also have a large average particle diameter with an increased proportion of coarse particles, and the plasticizer absorptivity becomes insufficient. Here, the degree of saponification is a measured value based on JIS K 6726:1994.

It is important that PVA(A) have a cloud point in a 1% by mass aqueous solution of more than 25.0°C and less than 35.0°C. Preferably, the cloud point is more than 28.0°C and less than 34.5°C. A cloud point of 25.0°C or less impairs ease of handling, such as by causing PVA(A) to easily precipitate in an aqueous solution, making it impossible to add PVA(A) in accurate quantities. When the cloud point is 35.0°C or more, the resulting vinyl polymer particles have a large average particle diameter with an increased proportion of coarse particles. As used herein, "cloud point" means a temperature at which the transmittance of visible light of 660-nm wavelength through a 1% by mass aqueous solution of PVA(A) falls below 80%. The cloud point can be measured with, for example, an ultraviolet-visible spectrophotometer (UV-2450, UV-2600, UV-2700 manufactured by Shimadzu Corporation).

It is important that PVA(A) have a UV absorption spectrum absorbance (x) at 280 nm of more than 0.420 and less than 0.520 in a 0.1% by mass aqueous solution. Preferably, the UV absorption spectrum absorbance (x) is more than 0.445 and less than 0.505. It is important that PVA(A) have a UV absorption spectrum absorbance (y) at 320 nm of more than 0.300 and less than 0.400 in the same 0.1% by mass aqueous solution. Preferably, the UV absorption spectrum absorbance (y) is more than 0.320 and less than 0.390. The UV absorption spectrum absorbance represents the amount or linkage of double bonds introduced to PVA(A), and with the absorbance falling in the foregoing ranges, adsorbability for vinyl compounds increases, and this contributes to polymerization stability when the PVA(A) is used as a dispersion stabilizer for suspension polymerization. When the absorbance is outside of the foregoing ranges, adsorbability for vinyl compounds may decrease, or PVA(A) may assume a dissolved state beyond adsorption, with the result that PVA(A) fails to exhibit its effect as a dispersion stabilizer for suspension polymerization. The absorbance (x) and absorbance (y) are measured using the device and conditions described in the Examples below.

The ratio (y/x) of absorbance (y) at 320 nm to absorbance (x) at 280nm in a UV absorption spectrum of PVA(A) is preferably more than 0.70 and 0.98 or less, more preferably 0.71 or more and 0.85 or less, even more preferably 0.71 or more and 0.80 or less. Here, the UV absorption at 280-nm wavelength derives from the structure $[-CO-(CH=CH)_2-]$ in PVA(A), and the UV absorption at 320-nm wavelength derives from the structure $[-CO-(CH=CH)_3-]$ in PVA(A). This means that the amounts of double bonds with different linkages introduced into PVA(A) approach the same number as the absorbance ratio (y/x) becomes closer to 1.0. The double-bond linkage in PVA(A) appears to contribute to polymerization stability, and to inhibit formation of coarse particles when PVA(A) is used as a dispersion stabilizer for suspension polymerization of vinyl compounds.

PVA(A) is preferred for use as a dispersion stabilizer for suspension polymerization of vinyl compounds. When used as a dispersion stabilizer for suspension polymerization of vinyl compounds, PVA(A) stabilizes the polymerization reaction, and the plasticizer absorptivity improves with reduced formation of coarse particles in the resulting vinyl polymers.

Vinyl Polymer Producing Method

Another embodiment of the present invention is a vinyl polymer producing method in which a vinyl compound is subjected to suspension polymerization in the presence of a PVA(A)-containing dispersion stabilizer for suspension polymerization of the present invention. The method produces a particulate vinyl polymer.

There is no particular limitation on how to charge the PVA(A)-containing dispersion stabilizer for suspension polymerization of the present invention into a polymerization vessel. For example, the dispersion stabilizer may be charged into a polymerization vessel in the form of (i) an aqueous solution, or (ii) an as-processed powder form. Preferred for uniformity in a polymerization vessel is method (i).

A dispersion stabilizer for suspension polymerization of the present invention may contain various additives, in addition to PVA(A), provided that such additives are not detrimental to the gist of the present invention in the suspension polymerization of a vinyl compound. Examples of such additives include polymerization degree adjusters such as aldehydes, halogenated hydrocarbons, and mercaptans; polymerization inhibitors such as phenol compounds, sulfur compounds, and N-oxide compounds; pH adjusters; cross-linking agents; preservatives; mildewcides; antiblocking agents; antifoaming agents; and compatibilizing agents. The content of additives in the dispersion stabilizer for suspension polymerization is preferably less than 10% by mass, more preferably less than 5% by mass, even more preferably less than 1% by mass relative to PVA(A).

Examples of the vinyl compounds include vinyl halides such as vinyl chloride; vinyl esters such as vinyl acetate and vinyl propionate; acrylic acid, methacrylic acid, and esters and salts thereof; maleic acid, fumaric acid, and esters and anhydrides thereof; styrene, acrylonitrile, vinylidene chloride, and vinyl ethers. Preferably, the dispersion stabilizer for suspension polymerization of the present invention is used for suspension polymerization of vinyl chloride alone, or for suspension polymerization of vinyl chloride and a monomer that is copolymerizable with vinyl chloride. Examples of the monomer that is copolymerizable with vinyl chloride include vinyl esters such as vinyl acetate and vinyl propionate; (meth) acrylic acid esters such as methyl (meth)acrylate and ethyl (meth)acrylate; $\alpha$-olefins such as ethylene and propylene; unsaturated dicarboxylic acids such as maleic anhydride and itaconic acid; acrylonitrile, styrene, vinylidene chloride, and vinyl ethers.

For suspension polymerization of vinyl compounds, an oil-soluble or water-soluble polymerization initiator, which is conventionally used for polymerization of vinyl chloride, can be used. Examples of the oil-soluble polymerization initiator include: peroxycarbonate compounds such as diisopropyl peroxydicarbonate, bis(2-ethylhexyl)peroxydicarbonate, and bis(2-ethoxyethyl)peroxydicarbonate; perester compounds such as t-butyl peroxyneodecanoate, t-butyl peroxypivalate, t-hexyl peroxypivalate, and $\alpha$-cumyl peroxyneodecanoate; peroxides such as acetyl(cyclohexylsulfonyl)peroxide, 2,4,4-trimethylpentyl-2-peroxyphenoxyacetate, bis(3,5,5-trimethylhexanoyl)peroxide, and lauroyl peroxide; and azo compounds such as 2,2'-azobis(2,4-dimethylvaleronitrile), 2,2'-azobis(isobutyronitrile), and 2,2'-azobis(4-methoxy-2,4-dimethylvaleronitrile). Examples of the water-soluble polymerization initiator include potassium persulfate, ammonium persulfate, hydrogen peroxide, and cumene hydroperoxide. The oil-soluble or water-soluble polymerization initiators may be used alone, or two or more thereof may be used in combination.

In suspension polymerization of a vinyl compound, the polymerization temperature is not particularly limited, and may be about 20°C, or higher than 90°C, or may be about 20°C to 60°C. A polymerizer equipped with a reflux condenser may be used in order to increase the heat removal efficiency of the polymerization reaction system.

The dispersion stabilizer for suspension polymerization of the present invention shows high polymerization stability, particularly when used in reduced amounts. In suspension polymerization of a vinyl compound, the dispersion stabilizer for suspension polymerization of the present invention may be used in an amount (concentration) of 1,000 ppm or less, 800 ppm or less, 700 ppm or less, 600 ppm or less, or 500 ppm or less relative to the vinyl compound. Here, "ppm" means "ppm by mass".

The resulting vinyl polymer can be used for formation of various molded products by adding additives such as a plasticizer, as needed.

EXAMPLES

The following describes the present invention in greater detail by way of Examples. It should be noted that the present invention is in no way limited by the following Examples. In the following Examples and Comparative Examples, "part(s)" means "part(s) by mass", and "ppm" means "ppm by mass", unless otherwise specifically stated.

Viscosity-Average Degree of Polymerization of PVA(A)

The viscosity-average degree of polymerization of PVA(A) was measured according to JIS K 6726:1994. Specifically, when PVA(A) had a degree of saponification of less than 99.5 mol%, PVA(A) was saponified until the degree of saponification reached at least 99.5 mol%, and the resulting PVA was measured for viscosity-average degree of polymerization (P) from the limiting viscosity [$\eta$] (liter/g) measured in water at 30°C, using the following formula.

$$P = ([\eta] \times 10^4/8.29)^{(1/0.62)}$$

Degree of Saponification of PVA(A)

The degree of saponification of PVA(A) was determined according to JIS K 6726:1994.

Degree of Modification by Chlorine or Bromine Atom Introduced to PVA(A)

PVA(A) was burned in a flask under an oxygen atmosphere. The combustion gas was then absorbed in water, and measured with an ion chromatograph ICS-5000 manufactured by Thermo Fisher Scientific Inc. The degree of modification (% by mass) was determined from the mass of the chlorine or bromine atoms contained in PVA(A) by comparing the peak area with a standard solution of a known concentration of chlorine or bromine.

Cloud Point of PVA(A)

A 1% by mass aqueous solution of PVA(A) was prepared. The aqueous solution was charged into a cell having a 1-cm light path, and visible light transmittance at 660 nm was measured at varying measurement temperatures using an ultraviolet-visible spectrophotometer (UV-2450, manufactured by Shimadzu Corporation). The temperature at which the visible light transmittance fell below 80% was determined as the cloud point.

UV Absorption Spectrum Absorbance of PVA(A)

A 0.1% by mass aqueous solution of PVA(A) was prepared. The aqueous solution was charged into a cell having a 1-cm light path, and was measured for absorbance at 280 nm and 320 nm using an ultraviolet-visible spectrophotometer (UV-2450, manufactured by Shimadzu Corporation).

Production Example 1 (Production of PVA(A1))

Vinyl acetate (2,850 parts; hereinafter, vinyl acetate also will be referred to simply as "VAc") and methanol (150 parts) were charged into a polymerization vessel. After replacement with nitrogen, the mixture was heated to 60°C, and 2,2'-azobis(isobutyronitrile) was added in an amount of 0.06% by mass relative to VAc, along with 10 parts of methanol. This was immediately followed by addition of a methanol solution of carbon tetrachloride (a concentration of 50% by mass; room temperature) to the polymerization vessel at a constant rate to initiate polymerization. A polymerization conversion rate reached 70% upon addition of 15 parts of carbon tetrachloride, and the polymerization was ceased at this point. The remaining VAc was then removed from the system with methanol in a procedure performed under reduced pressure while adding methanol. This yielded a 50% by mass methanol solution of vinyl ester polymer (hereinafter, also will be referred to simply as "PVAc"). The methanol solution of vinyl ester polymer was diluted to 30% by mass with methanol solvent, and this was followed by a saponification reaction carried out for 1 hour at 40°C with the saponification reaction solution containing 1% by mass water, using sodium hydroxide as a saponification catalyst in a molar ratio of 0.008 with respect to PVAc. The reaction mixture was neutralized with methyl acetate, and dried. This produced a PVA(A1) that had a viscosity-average degree of polymerization of 780, a degree of saponification of 72 mol%, a degree of modification by chlorine atoms of 0.25% by mass, a UV absorption spectrum absorbance (x) at 280 nm of 0.485 in a 0.1% by mass aqueous solution, a UV absorption spectrum absorbance (y) at 320 nm of 0.360 in the same 0.1% by mass aqueous solution, a ratio (y/x) of 0.74, and a cloud point of 31.4°C in a 1% by mass aqueous solution.

Production Examples 2 to 14 (Production of PVA(A2) to (A14))

PVA(A2) to PVA(A14) were produced in the same manner as in Production Example 1, except that the vinyl acetate and methanol contents, the type and content of chain transfer agent and the method of addition of chain transfer agent, the polymerization conversion rate, and saponification conditions such as the water content of saponification reaction solution were varied as shown in Tables 1 and 2. Table 1 shows the production conditions and results. Table 2 shows the types of chain transfer agents used. It is to be noted that PVA(A13) was produced through polymerization that used a large quantity of chain transfer agent charged at once in an early stage of reaction, and the polymerization product had a gel form, preventing it from being used in subsequent steps.

[Table 1]

| | PVA | Polymerization conditions | | | | | | Saponification conditions | | |
|---|---|---|---|---|---|---|---|---|---|---|
| | | Vinyl acetate Parts | Methanol Parts | Chain transfer agent | | | Polymerization conversion rate % | PVAc concentration wt% | Water content of system wt% | NaOH Molar ratio |
| | | | | Type | Addition method | Content in parts | | | | |
| Production example 1 | PVA(A1) | 2850 | 150 | A | Sequential | 15 | 70 | 30 | 1 | 0.008 |
| Production example 2 | PVA(A2) | 2000 | 1000 | A | Sequential | 18 | 60 | 30 | 1 | 0.009 |
| Production example 3 | PVA(A3) | 2850 | 150 | A | Sequential | 15 | 50 | 30 | 1 | 0.009 |
| Production example 4 | PVA(A4) | 2850 | 150 | A | Sequential | 15 | 70 | 30 | 1 | 0.009 |
| Production example 5 | PVA(A5) | 2850 | 150 | B | Sequential | 45 | 70 | 30 | 1 | 0.010 |
| Production example 6 | PVA(A6) | 2850 | 150 | A | Early at once | 15 | 60 | 30 | 1 | 0.007 |
| Production example 7 | PVA(A7) | 1800 | 1200 | B | Sequential | 6 | 20 | 30 | 1 | 0.010 |
| Production example 8 | PVA(A8) | 2850 | 150 | B | Early at once | 6 | 20 | 30 | 1 | 0.010 |
| Production example 9 | PVA(A9) | 1200 | 1800 | A | Sequential | 6 | 40 | 30 | 1 | 0.009 |
| Production example 10 | PVA(A10) | 2850 | 150 | A | Sequential | 15 | 50 | 30 | 1 | 0.010 |
| Production example 11 | PVA(A11) | 2850 | 150 | A | Sequential | 15 | 50 | 30 | 1 | 0.009 |
| Production example 12 | PVA(A12) | 2850 | 150 | A | Sequential | 65 | 70 | 30 | 1 | 0.011 |
| Production example 13 | PVA(A13) | 2850 | 150 | A | Early at once | 65 | 70 | - | - | - |
| Production example 14 | PVA(A14) | 2850 | 150 | A | Early at once | 15 | 90 | 30 | 1 | 0.006 |

EP 3 613 778 B1

[Table 1] Continued

| | Analyzed values for PVA(A) | | | | | | Cloud point |
|---|---|---|---|---|---|---|---|
| | Degree of polymerization | Degree of saponification | Degree of modification | Absorbance | | | |
| | | | | 280 nm | 320 nm | 320 nm/280 nm | |
| | | mol% | wt% | (x) | (y) | (y/x) | °C |
| Production example 1 | 780 | 72 | 0.25 | 0.485 | 0.360 | 0.74 | 31.4 |
| Production example 2 | 520 | 72 | 0.55 | 0.499 | 0.376 | 0.75 | 33.6 |
| Production example 3 | 880 | 72 | 0.40 | 0.489 | 0.369 | 0.75 | 30.0 |
| Production example 4 | 780 | 76 | 0.25 | 0.485 | 0.359 | 0.74 | 32.0 |
| Production example 5 | 730 | 72 | 0.77 | 0.505 | 0.386 | 0.76 | 32.0 |
| Production example 6 | 930 | 72 | 0.14 | 0.442 | 0.307 | 0.69 | 34.6 |
| Production example 7 | 530 | 72 | 0.80 | 0.505 | 0.386 | 0.76 | 32.0 |
| Production example 8 | 570 | 76 | 0.50 | 0.488 | 0.309 | 0.63 | 34.6 |
| Production example 9 | 350 | 72 | 0.52 | 0.488 | 0.374 | 0.77 | 34.9 |
| Production example 10 | 880 | 79 | 0.40 | 0.487 | 0.360 | 0.74 | 34.8 |
| Production example 11 | 880 | 64 | 0.40 | 0.484 | 0.360 | 0.74 | 25.4 |
| Production example 12 | 910 | 72 | 1.05 | 0.518 | 0.397 | 0.77 | 26.8 |
| Production example 13 | Unmeasurable because of gelation occurring during polymerization | | | | | | |
| Production example 14 | 680 | 72 | 0.05 | 0.342 | 0.201 | 0.59 | 33.1 |

[Table 2]

| Type | Chain transfer agent |
|---|---|
| A | Carbon tetrachloride |
| B | Carbon tetrabromide |

Example 1

PVA(A1) as a dispersion stabilizer for suspension polymerization was dissolved in deionized water, and 100 parts of the PVA(A1) aqueous solution was charged into an autoclave. Here, PVA(A1) was charged in an amount that would make the PVA(A1) concentration 600 ppm with respect to the amount of vinyl chloride charged. Thereafter, deionized water was added to make the total fraction of deionized water 1,200 parts. This was followed by addition of 0.65 parts of a 70% by mass toluene solution of cumyl peroxyneodecanoate, and 1.05 parts of a 70% by mass toluene solution of t-butyl peroxyneodecanoate into an autoclave, and nitrogen was introduced into the autoclave until the pressure reached 0.20 MPa. Nitrogen purging was conducted a total of five times to thoroughly replace inside of the autoclave with nitrogen and remove oxygen. After this procedure, 940 parts of vinyl chloride was added. The contents inside the autoclave were then heated to 57°C to initiate polymerization of vinyl chloride, with stirring. The autoclave had an inner pressure of 0.80 MPa at the start of polymerization. After about 3.5 hours from the start of polymerization, the polymerization was ceased at the timing when the pressure inside the autoclave reached 0.70 MPa. The polymerization product was taken out after removing unreacted vinyl chloride. The product was then dried at 65°C for 16 hours to obtain vinyl chloride polymer particles.

Evaluation of Vinyl Chloride Polymer Particles

The vinyl chloride polymer particles were evaluated for (1) average particle diameter, (2) particle size distribution, and (3) plasticizer absorptivity, using the following methods. The evaluation results are presented in Table 3.

(1) Average Particle Diameter

The particle size distribution was measured according to the dry sieving method described in JIS Z 8815:1994, using a sieve that complied with Tyler Standard Sieve Series. The measurement results were plotted to create a Rosin-Rammler distribution, and the average particle diameter ($d_{p50}$) was calculated.

(2) Particle Size Distribution

The content of vinyl chloride polymer particles (% by mass) that did not pass through a 355-$\mu$m mesh sieve (equivalent to a JIS standard 42-mesh sieve) was evaluated using the following criteria. Here, the content means the percentage of particles accumulating on the sieve. The sieve opening complies with the nominal opening W of JIS Z 8801-1-2006.

A: less than 0.5%
B: 0.5% or more and less than 1.0%
C: 1.0% or more

The content of vinyl chloride polymer particles (% by mass) that passed through a 355-$\mu$m mesh sieve but did not pass through a 250-$\mu$m mesh sieve (equivalent to a JIS standard 60-mesh sieve) was evaluated using the following criteria. Here, the content means the percentage of particles accumulating on the sieve. The sieve opening complies with the nominal opening W of JIS Z 8801-1-2006.

A: less than 5%
B: 5% or more and less than 10%
C: 10% or more

With regard to the vinyl chloride polymer particles that did not pass through the 355-$\mu$m mesh sieve and the vinyl chloride polymer particles that did not pass through the 250-$\mu$m mesh sieve, smaller content values of these polymer particles mean higher polymerization stability with fewer coarse particles and a sharper particle size distribution.

(3) Plasticizer Absorptivity

The mass (A (g)) of a 5-mL syringe filled with 0.02 g of absorbent cotton was measured, and 0.5 g of vinyl chloride polymer particles was added to the syringe and the combined mass (B (g)) was measured. After adding 1 g of dioctyl phthalate (DOP), the syringe was allowed to stand for 15 minutes, and centrifuged at 3,000 rpm for 40 minutes. The resulting mass (C (g)) was then measured. The plasticizer absorptivity (%) was determined from the calculation formula below. Higher values of plasticizer absorptivity mean that the product is more easily processible, and that fewer defects, such as seeding, occur on the exterior of the product, particularly when the polymer is processed into a sheet.

$$\text{Plasticizer absorptivity (\%)} = 100 \times [\{(C\text{-}A)/(B\text{-}A)\} \text{-} 1]$$

Examples 2 to 16

Suspension polymerization of vinyl chloride was conducted in the same manner as in Example 1, except that the PVAs(A) shown in Table 3 were used as dispersion stabilizers for suspension polymerization in the amounts given in the table relative to vinyl chloride. The results are presented in Table 3. The dispersion stabilizers for suspension polymerization of the present invention do not produce polyvinyl chloride particles of coarse particle sizes, and provide desirable polymerization stability even when used in small amounts with respect to vinyl chloride.

Comparative Examples 1 and 2

Suspension polymerization of vinyl chloride was conducted in the same manner as in Examples 1 and 2, except that PVA(A9) was used as PVA(A). The results are presented in Table 3. PVA(A9) had an excessively low degree of polymerization, and the resulting vinyl chloride polymer particles had a large average particle diameter with a large proportion of coarse particles.

Comparative Examples 3 and 4

Suspension polymerization of vinyl chloride was conducted in the same manner as in Examples 1 and 2, except that PVA(A10) was used as PVA(A). The results are presented in Table 3. PVA(A10) had an excessively high degree of saponification, and the resulting vinyl chloride polymer particles had a large average particle diameter with a large proportion of coarse particles. The plasticizer absorptivity was also insufficient.

Comparative Examples 5 and 6

Suspension polymerization of vinyl chloride was conducted in the same manner as in Examples 1 and 2, except that PVA(A11) was used as PVA(A). The results are presented in Table 3. PVA(A11) had an excessively low degree of saponification, and the resulting vinyl chloride polymer particles had a large average particle diameter with a large proportion of coarse particles.

Comparative Examples 7 and 8

Suspension polymerization of vinyl chloride was conducted in the same manner as in Examples 1 and 2, except that PVA(A12) was used as PVA(A). The results are presented in Table 3. PVA(A12) had an excessively high degree of modification by chlorine atoms, and the compatibility with vinyl chloride was overly high. The resulting vinyl chloride polymer particles therefore had a large average particle diameter with a large proportion of coarse particles.

Comparative Examples 9 and 10

Suspension polymerization of vinyl chloride was conducted in the same manner as in Examples 1 and 2, except that PVA(A14) was used as PVA(A). The results are presented in Table 3. PVA(A14) had an excessively low degree of modification by chlorine atoms, and failed to produce a sufficient effect with the introduced modifying group. Accordingly, the polymerization stability was insufficient. The resulting vinyl chloride polymer particles therefore had a large average particle diameter with a large proportion of coarse particles.

[Table 3]

| | PVA | Amount used (ppm/VCM) | Evaluation results for vinyl chloride polymer particles | | | |
| | | | Average particle diameter ($\mu$m) | Particle size distribution | | Plasticizer absorptivity (%) |
| | | | | Particles on 42 mesh (Amount of particles that did not pass through 355-$\mu$m mesh sieve) | Particles on 60 mesh (Amount of particles that did not pass through 250-$\mu$m mesh sieve) | |
| Example 1 | PVA(A1) | 600 | 155.5 | A | A | 29.4 |
| Example 2 | | 500 | 171.2 | A | A | 30.1 |

(continued)

| | PVA | Amount used (ppm/VCM) | Evaluation results for vinyl chloride polymer particles | | | |
|---|---|---|---|---|---|---|
| | | | Average particle diameter ($\mu$m) | Particle size distribution | | Plasticizer absorptivity (%) |
| | | | | Particles on 42 mesh (Amount of particles that did not pass through 355-$\mu$m mesh sieve) | Particles on 60 mesh (Amount of particles that did not pass through 250-$\mu$m mesh sieve) | |
| Example 3 | PVA(A2) | 600 | 158.5 | A | A | 30.1 |
| Example 4 | | 500 | 174.6 | A | A | 30.6 |
| Example 5 | PVA(A3) | 600 | 152.6 | A | A | 29.1 |
| Example 6 | | 500 | 168.5 | A | A | 29.8 |
| Example 7 | PVA(A4) | 600 | 158.2 | A | A | 29.1 |
| Example 8 | | 500 | 175.6 | B | A | 29.6 |
| Example 9 | PVA(A5) | 600 | 153.5 | A | A | 29.7 |
| Example 10 | | 500 | 166.4 | A | A | 30.5 |
| Example 11 | PVA(A6) | 600 | 164.3 | B | A | 28.4 |
| Example 12 | | 500 | 185.5 | B | A | 29.0 |
| Example 13 | PVA(A7) | 600 | 157.2 | A | A | 29.2 |
| Example 14 | | 500 | 179.9 | B | A | 29.8 |
| Example 15 | PVA(A8) | 600 | 167.2 | B | A | 28.4 |
| Example 16 | | 500 | 188.9 | B | A | 29.0 |

[Table 3] Continued

| | PVA | Amount used (ppm/ VCM) | Evaluation results for vinyl chloride polymer particles | | | |
| | | | Average particle diameter (μm) | Particle size distribution | | Plasticizer absorptivity (%) |
| | | | | Particles on 42 mesh (Amount of particles that did not pass through 355-μm mesh sieve) | Particles on 60 mesh (Amount of particles that did not pass through 250-μm mesh sieve) | |
|---|---|---|---|---|---|---|
| Comparative Example 1 | PVA(A9) | 600 | 220.0 | C | C | 26.1 |
| Comparative Example 2 | | 500 | 279.5 | C | C | 26.6 |
| Comparative Example 3 | PVA(A10) | 600 | 189.5 | C | B | 22.2 |
| Comparative Example 4 | | 500 | 209.5 | C | C | 22.2 |
| Comparative Example 5 | PVA(A11) | 600 | 253.1 | C | C | 28.4 |
| Comparative Example 6 | | 500 | 302.9 | C | C | 28.9 |
| Comparative Example 7 | PVA(A12) | 600 | 197.2 | C | C | 26.1 |
| Comparative Example 8 | | 500 | 204.5 | C | C | 26.6 |
| Comparative Example 9 | PVA(A14) | 600 | 250.0 | C | C | 27.1 |
| Comparative Example 10 | | 500 | 348.3 | C | C | 27.4 |
| In the table, VCM means vinyl chloride monomer. | | | | | | |

As demonstrated in the Examples above, a vinyl polymer having excellent polymerization stability with a small average particle diameter and little formation of coarse particles can be obtained with the use of the dispersion stabilizer for suspension polymerization of vinyl compounds of the present invention that contains a PVA in which the degree of modification by a chlorine or bromine atom falls in a specific range, and in which ultraviolet absorbance values at specific wavelengths in an aqueous solution, and a cloud point in an aqueous solution fall in specific ranges, even when the dispersion stabilizer is used in small amounts. This makes the present invention highly useful in industry.

INDUSTRIAL APPLICABILITY

With a dispersion stabilizer for suspension polymerization of the present invention, a method can be provided that enables suspension polymerization of a vinyl compound with excellent polymerization stability, even when the dispersion stabilizer is used in reduced amounts.

Claims

1.    A dispersion stabilizer for suspension polymerization of vinyl compounds that comprises a vinyl alcohol polymer (A) having a viscosity-average degree of polymerization of more than 500 and less than 1,000, a degree of saponification of more than 65 mol% and less than 77 mol%, a degree of modification by a chlorine or bromine atom of 0.10% by mass or more and less than 1.00% by mass, a cloud point of more than 25.0°C and less than 35.0°C in a 1% by mass aqueous solution, an ultraviolet absorption spectrum absorbance (x) at 280 nm of more than 0.420 and less than 0.520 in a 0.1% by mass aqueous solution, and an ultraviolet absorption spectrum absorbance (y) at 320 nm of more than 0.300 and less than 0.400 in the same 0.1% by mass aqueous solution, wherein the viscosity-average degree of polymerization, the degree of saponification, the degree of modification, the cloud point, as well as the ultraviolet absorption spectrum absorbances (x) and (y) are measured as defined in the description.

2. The dispersion stabilizer for suspension polymerization according to claim 1, wherein a ratio (y/x) of absorbance (y) to absorbance (x) is more than 0.70 and 0.98 or less.

3. A method for producing the dispersion stabilizer for suspension polymerization of claim 1 or 2, comprising:

   a polymerization step of obtaining a vinyl ester polymer through polymerization of a vinyl ester monomer with addition of carbon tetrachloride or carbon tetrabromide as a chain transfer agent; and
   a step of obtaining a vinyl alcohol polymer (A) through saponification of the vinyl ester polymer obtained in the polymerization step,
   wherein a polymerization conversion rate of the vinyl ester monomer is 20% or more and less than 90%.

4. The method according to claim 3, wherein the chain transfer agent is sequentially added.

5. A method for producing a vinyl polymer, comprising subjecting a vinyl compound to suspension polymerization in the presence of the dispersion stabilizer for suspension polymerization of claim 1 or 2.

**Patentansprüche**

1. Dispersionsstabilisator für die Suspensionspolymerisation von Vinylverbindungen, der ein Vinylalkoholpolymer (A) mit einem viskositätsmittleren Polymerisationsgrad von mehr als 500 und weniger als 1000, einem Verseifungsgrad von mehr als 65 Mol-% und weniger als 77 Mol-%, einem Modifikationsgrad durch ein Chlor- oder Bromatom von 0,10 Massen-% oder mehr und weniger als 1,00 Massen-%, einem Trübungspunkt von mehr als 25,0°C und weniger als 35,0°C in einer 1 Massen-%igen wässrigen Lösung, einer Ultraviolett-Absorptionsspektrum-Extinktion (x) bei 280 nm von mehr als 0,420 und weniger als 0,520 in einer 0,1 Massen-%igen wässrigen Lösung und einer Ultraviolett-Absorptionsspektrum-Extinktion (y) bei 320 nm von mehr als 0,300 und weniger als 0,400 in der gleichen 0,1 Massen-%igen wässrigen Lösung umfasst, wobei der viskositätsmittlere Polymerisationsgrad, der Verseifungsgrad, der Modifikationsgrad, der Trübungspunkt sowie die Ultraviolett-Absorptionsspektrum-Extinktionen (x) und (y) wie in der Beschreibung definiert gemessen werden.

2. Dispersionsstabilisator für die Suspensionspolymerisation nach Anspruch 1, wobei das Verhältnis (y/x) der Extinktion (y) zur Extinktion (x) mehr als 0,70 und 0,98 oder weniger beträgt.

3. Verfahren zur Herstellung des Dispersionsstabilisators für die Suspensionspolymerisation nach Anspruch 1 oder 2, umfassend:

   einen Polymerisationsschritt zum Erhalten eines Vinylesterpolymers durch Polymerisation eines Vinylestermonomers unter Zusatz von Tetrachlorkohlenstoff oder Tetrabromkohlenstoff als Kettenübertragungsmittel, und
   einen Schritt des Erhaltens eines Vinylalkoholpolymers (A) durch Verseifung des in dem Polymerisationsschritt erhaltenen Vinylesterpolymers,
   wobei eine Polymerisationsumwandlungsrate des Vinylestermonomers 20% oder mehr und weniger als 90% beträgt.

4. Verfahren nach Anspruch 3, wobei das Kettenübertragungsmittel sequentiell zugegeben wird.

5. Verfahren zur Herstellung eines Vinylpolymers, umfassend das Unterziehen einer Vinylverbindung einer Suspensionspolymerisation in Gegenwart des Dispersionsstabilisators für die Suspensionspolymerisation nach Anspruch 1 oder 2.

**Revendications**

1. Stabilisant de dispersion pour polymérisation en suspension de composés de vinyle qui comprennent un polymère d'alcool vinylique (a) ayant un degré de polymérisation moyen en viscosité de plus de 500 et moins de 1000, un degré de saponification de plus de 65 % en mole et moins de 77 % en mole, un degré de modification par un atome de chlore ou brome de 0,10 % en masse ou plus et moins de 1,00 % en masse, un point de trouble de plus de 25,0 °C et moins de 35,0 °C dans une solution aqueuse à 1 % en masse, une absorbance de spectre d'absorption d'ultraviolet (x) à 280 nm de plus de 0,420 et moins de 0,520 dans une solution aqueuse à 0,1 % en masse et une absorbance de spectre d'absorption d'ultraviolet (y) à 320 nm de plus de 0,300 et moins de 0,400 dans la même solution aqueuse à 0,1 % en masse,
   dans lequel le degré de polymérisation moyen en viscosité, le degré de saponification, le degré de modification, le point de trouble ainsi que les absorbances de spectre d'absorption d'ultraviolet (x) et (y) sont mesurés tel que défini dans la description.

2. Stabilisant de dispersion pour polymérisation en suspension selon la revendication 1, dans lequel un rapport (y/x) d'absorbance (y) sur absorbance (x) est supérieur à 0,70 et 0,98 ou moins.

3. Procédé de production du stabilisant de dispersion pour polymérisation en suspension selon la revendication 1 ou 2, comprenant :

   une étape de polymérisation consistant à obtenir un polymère d'ester vinylique par polymérisation d'un monomère d'ester vinylique avec l'addition de tétrachlorure de carbone ou tétrabromure de carbone en tant qu'agent de transfert de chaîne ; et
   une étape consistant à obtenir un polymère d'alcool vinylique (A) par saponification du polymère d'ester vinylique obtenu dans l'étape de polymérisation,
   dans lequel un taux de conversion de polymérisation du monomère d'ester vinylique est de 20 % ou plus et moins de 90 %.

4. Procédé selon la revendication 3, dans lequel l'agent de transfert de chaîne est ajouté séquentiellement.

5. Procédé de production d'un polymère de vinyle, comprenant soumettre un composé de vinyle à une polymérisation en suspension en présence du stabilisant de dispersion pour polymérisation en suspension selon la revendication 1 ou 2.

**REFERENCES CITED IN THE DESCRIPTION**

**Patent documents cited in the description**

- JP 51045189 A
- JP 10067806 A
- JP 2004250695 A
- WO 2015119144 A
- US 5780547 A
- EP 2876116 A1
- WO 2016141256 A1